# EUROPEAN PATENT APPLICATION

(11) **EP 4 730 085 A1**
(43) Date of publication of application: **22.04.2026**
(21) Application number: 24845779.8
(22) Date of filing: 03.06.2024
(51) Int. Cl.: G06F 3/01, G06F 3/00, G06V 40/20, G06F 3/048, G06F 1/16, G06F 3/03, G06F 3/0346

(54) **METHOD AND DEVICE FOR DETERMINING OPERATION COMMAND OF CONTROLLER**

(30) Priority: 21.07.2023 KR 20230095412; 19.09.2023 KR 20230124613
(71) Applicant: Samsung Electronics Co., Ltd., Suwon-si, Gyeonggi-do 16677 (KR)
(72) Inventor: PARK, Miji, Suwon-si, Gyeonggi-do 16677 (KR); KIM, Sangheon, Suwon-si, Gyeonggi-do 16677 (KR); KIM, Youngjung, Suwon-si, Gyeonggi-do 16677 (KR); PARK, Hungi, Suwon-si, Gyeonggi-do 16677 (KR); AN, Jinwan, Suwon-si, Gyeonggi-do 16677 (KR); LEE, Sangyong, Suwon-si, Gyeonggi-do 16677 (KR); LEE, Jiwoo, Suwon-si, Gyeonggi-do 16677 (KR)
(74) Representative: Gulde & Partner
(86) International application number: PCT/KR2024/007537
(87) International publication number: WO 2025/023475

(57) **Abstract**

An electronic device according to one embodiment, when it is determined that an abnormality has occurred in a target controller among a plurality of controllers registered in the electronic device, displays a graphic affordance corresponding to the target controller on the basis of the abnormal state of the target controller, detects a user gesture for the displayed graphic affordance using a camera, and determines an operation command for the target controller indicated by the detected user gesture.

## Description

### Technical Field

The following description relates to a method of determining an operation command of a controller.

### Background Art

Recently, virtual reality, augmented reality, and mixed reality technologies that apply computer graphics have been developing. In this case, virtual reality technology refers to a technology that constructs a virtual space that does not exist in the real world using a computer and makes the user feel that virtual space as if it were real, and augmented reality or mixed reality technology refers to a technology that expresses information generated by a computer by superimposing it on the real world, that is, a technology that allows real-time interaction between the user and the system by combining the real world with the virtual world.

Among these technologies, augmented reality and mixed reality technologies are being combined with and used in various technical fields (e.g., broadcasting technology, medical technology, and game technology). A representative example of the application of augmented reality technology in the field of broadcasting technology is a case in which the weather map in front of a weather forecaster presenting a weather report on television naturally changes, or a case in which an advertisement image that does not exist in a stadium is inserted into a broadcast screen as if it actually exists in the stadium during a sports relay.

A representative service that provides augmented reality or mixed reality to users includes the metaverse. The metaverse is a compound word of "meta," meaning virtual or abstract, and "universe," meaning the real world, and refers to a three-dimensional virtual world. The metaverse is an advanced concept compared to the conventional term "virtual reality environment," and provides an augmented reality environment in which virtual worlds such as the web and the Internet are incorporated into the real world.

### DISCLOSURE OF THE INVENTION

### Technical Solutions

According to an embodiment, an electronic device includes a camera capturing a user gesture, a memory storing computer-executable instructions, and a processor accessing the memory and executing the instructions, wherein the instructions, when executed, cause the processor to, when determining that a target controller among a plurality of controllers registered with the electronic device has an abnormality, display, based on an abnormal state of the target controller, a graphic affordance corresponding to the target controller, detect the user gesture with respect to the displayed graphic affordance using the camera, and determine an operation command for the target controller indicated by the detected user gesture.

According to an embodiment, a method performed by an electronic device includes, when determining that a target controller among a plurality of controllers registered with the electronic device has an abnormality, displaying, based on an abnormal state of the target controller, a graphic affordance corresponding to the target controller, detecting the user gesture with respect to the displayed graphic affordance using a camera, and determining an operation command for the target controller indicated by the detected user gesture.

### BRIEF DESCRIPTION OF DRAWINGS

FIG. 1 is a block diagram illustrating an exemplary configuration of an electronic device according to various embodiments.
FIG. 2 illustrates an example of an optical see-through (OST) device according to various embodiments.
FIG. 3 illustrates an example of an optical system of an eye tracking (ET) camera, a transparent member, and a display according to various embodiments.
FIGS. 4A and 4B are diagrams illustrating examples of a front view and a rear view of an electronic device according to various embodiments.
FIG. 5 illustrates an example of construction of a virtual space and input from and output to a user in a virtual space according to various embodiments.
FIG. 6 is a flowchart schematically illustrating a process of determining an operation command for a controller according to various embodiments.
FIG. 7 illustrates a situation in which a user uses a plurality of controllers according to various embodiments.
FIG. 8 is a diagram illustrating a case in which an electronic device detects an operational error of a button included in a controller according to various embodiments.
FIGS. 9A and 9B are diagrams illustrating a process in which an electronic device displays a graphic affordance corresponding to a controller when the electronic device detects an operational error of a button included in the controller according to various embodiments.
FIG. 10 is a diagram illustrating a process in which an electronic device displays a graphic affordance having an increased size for a controller according to various embodiments.
FIG. 11 is a diagram illustrating a process of tracking a user's hand when an electronic device detects an operational error of a tracking sensor included in a controller according to various embodiments.
FIG. 12 is a diagram illustrating a process in which an electronic device displays a graphic affordance corresponding to a controller when a connection between the controller and the electronic device is terminated or when the controller is separated from a user's hand according to various embodiments.
FIG. 13 is a diagram illustrating a process in which an electronic device changes an object type of a graphic affordance displayed corresponding to a controller according to various embodiments.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

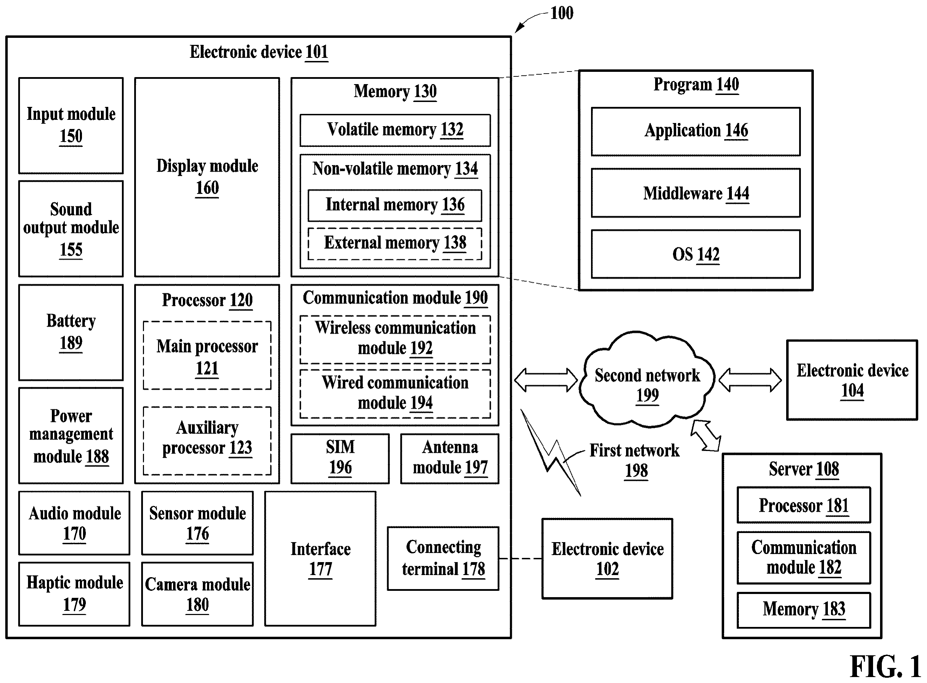

FIG. 1 is a block diagram illustrating an exemplary configuration of an electronic device according to various embodiments.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network) or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which AI is performed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 (e.g., a display) may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that supports direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or IR data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and next-generation communication technology, for example, new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, for example, a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or user plane (U-plane) latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199.

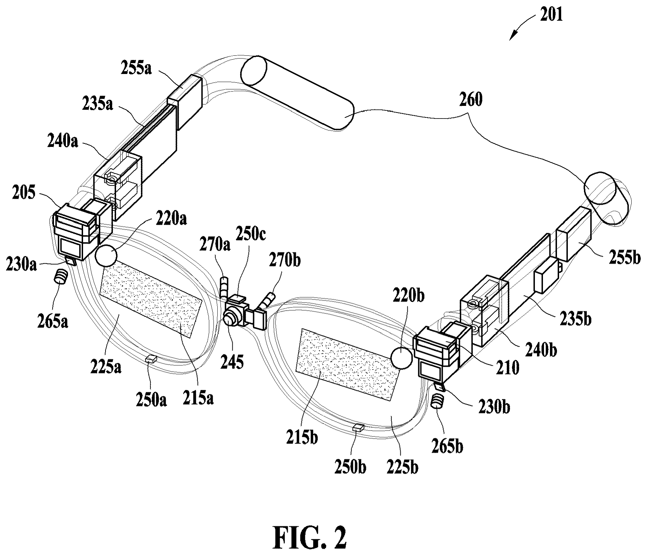

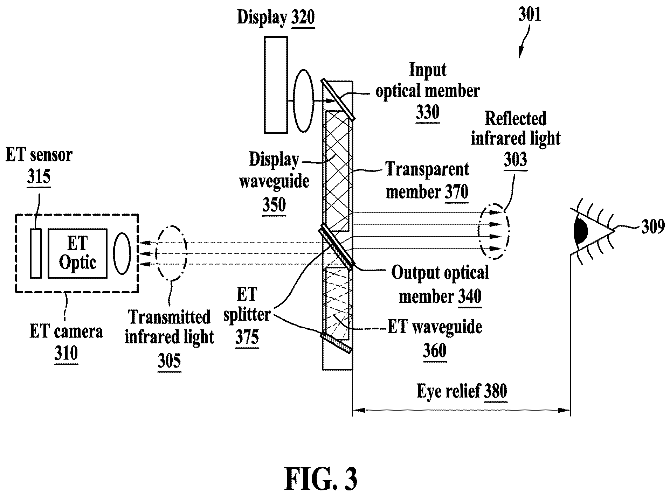

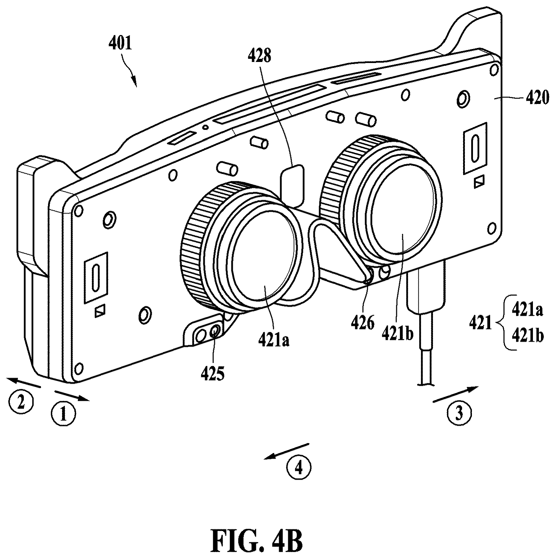

Each of the external electronic devices 102 and 104, and the server 108 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transmit an outcome of the performing to the electronic device 101. The electronic device 101 may provide the outcome, with or without further processing of the outcome, as at least part of a reply to the request. In the disclosure, an example in which the electronic device 101 is an augmented reality (AR) device (e.g., an electronic device 201 of FIG. 2, an electronic device 301 of FIG. 3, or an electronic device 401 of FIG. 4B), and the server 108 among the external electronic devices 102 and 104, and the server 108 transmits, to the electronic device 101, a result of executing a virtual space and an additional function or service associated with the virtual space will be mainly described.

The server 108 may include a processor 181, a communication module 182, and memory 183. The processor 181, the communication module 182, and the memory 183 may be similarly configured to the processor 120, the communication module 190, and the memory 130 of the electronic device 101. For example, the processor 181 may provide a virtual space and an interaction between users in the virtual space by executing instructions stored in the memory 183. The processor 181 may generate at least one of visual information, auditory information, or tactile information of the virtual space and objects in the virtual space. For example, as the visual information, the processor 181 may generate rendered data (e.g., visual rendered data) obtained by rendering an appearance (e.g., a shape, size, color, or texture) of the virtual space and an appearance (e.g., a shape, size, color, or texture) of an object positioned in the virtual space. In addition, the processor 181 may generate rendered data that renders an interaction between objects (e.g., a physical object, a virtual object, or an avatar object) in the virtual space or a change (e.g., a change in an appearance of an object, occurrence of sound, or occurrence of tactile sensation) based on one or more user inputs to an object (e.g., a physical object, a virtual object, or an avatar object). The communication module 182 may establish communication with a first electronic device (e.g., the electronic device 101) of a user and a second electronic device (e.g., the electronic device 102) of another user. The communication module 182 may transmit at least one of visual information, tactile information, or auditory information described above to the first electronic device and the second electronic device. For example, the communication module 182 may transmit rendered data.

For example, after rendering content data executed by an application, the server 108 may transmit the content data to the electronic device 101 and the electronic device 101 receiving the data may output the content data to the display module 160. If the electronic device 101 detects a movement of a user through an inertial measurement unit (IMU) sensor or the like, the processor 120 of the electronic device 101 may correct rendered data received from the external electronic device 102 based on information of the movement and output the data to the display module 160. Alternatively, the processor may transmit the information of the movement to the server 108 to request rendering such that screen data is updated accordingly. However, embodiments are limited thereto, and the rendering may be performed by various types of external electronic devices (e.g., 102 and 104) such as a smartphone or a case device for storing and charging the electronic device 101. The rendering data corresponding to the virtual space generated by the external electronic devices 102 and 104 may be provided to the electronic device 101. In another example, the electronic device 101 may receive virtual spatial information (e.g., vertex coordinates, texture, and color defining a virtual space) and object information (e.g., vertex coordinates, texture, and color defining an appearance of an object) from the server 108 and perform rendering by itself based on the received data.

FIG. 2 illustrates an example of an optical see-through (OST) device according to various embodiments.

An electronic device 201 may include at least one of a display (e.g., the display module 160 of FIG. 1), a vision sensor, light sources 230a and 230b, an optical element, or a substrate. The electronic device 201 of which the display is transparent and provides an image through the transparent display may be referred to as an OST device.

For example, the display may include a liquid crystal display (LCD), a digital mirror device (DMD), or a liquid crystal on silicon (LCoS), an organic light-emitting diode (OLED), or a micro light-emitting diode (micro LED).

In an embodiment, when the display is one of an LCD, a DMD, or an LCoS, the electronic device 201 may include the light sources 230a and 230b that emit light to a screen output region (e.g., screen display portions 215a and 215b) of the display. In another embodiment, when the display is capable of generating light by itself, for example, when the display is either the OLED or the micro-LED, the electronic device 201 may provide a virtual image with a relatively high quality to a user even though the separate light sources 230a and 230b are not included. In an embodiment, when the display is implemented as an OLED or a micro LED, a light source 230a or 230b may be unnecessary, and accordingly the electronic device 201 may be reduced in weight.

Referring to FIG. 2, the electronic device 201 may include a display, a first transparent member 225a and/or a second transparent member 225b. A user may use the electronic device 201 while wearing the electronic device 201 on their face. The first transparent member 225a and/or the second transparent member 225b may be formed of a glass plate, a plastic plate, or a polymer, and may be transparently or translucently formed. According to an embodiment, the first transparent member 225a may be disposed to face the right eye of the user, and the second transparent member 225b may be disposed to face the left eye of the user. The display may include a first display 205 configured to output a first image (e.g., a right image) corresponding to the first transparent member 225a and a second display 210 configured to output a second image (e.g., a left image) corresponding to the second transparent member 225b. In an embodiment, when each of the displays is transparent, the displays and transparent members may be disposed at positions facing the user's eyes to configure the screen display portions 215a and 215b.

In an embodiment, the light emitted from the display 205 or 210 may be guided by the waveguide through the input optical member 220a or 220b. Light moving into the display waveguide may be guided toward eyes of a user through an output optical member (e.g., an output optical member 340 of FIG. 3). The screen display portions 215a and 215b may be determined based on light emitted toward the eyes of the user.

For example, the light emitted from the displays 205 and 210 may be reflected from a grating region of the waveguide formed in the input optical members 220a and 220b and the screen display portions 215a and 215b and may be transmitted to the eyes of the user.

The optical element may include at least one of a lens or an optical waveguide.

The lens may adjust a focus such that a screen output to the display is visible to the eyes of the user. The lens may include, for example, at least one of a Fresnel lens, a pancake lens, or a multichannel lens.

The optical waveguide may transmit an image ray generated by the display to the eyes of the user. For example, the image ray may represent a ray of light that is emitted by the light source 230a or 230b and passes through the screen output region of the display. The optical waveguide may be formed of glass, plastic, or polymer. The optical waveguide may include a nanopattern formed on a portion of an inner surface or a portion of an outer surface, for example, a grating structure of a polygonal or a curved shape. An exemplary structure of the waveguide is described below with reference to FIG. 3.

The vision sensor may include at least one of a camera or a depth sensor.

The first camera 265a or 265b may be a recognition camera and may be a camera used for 3 degrees of freedom (DoF) or 6DoF head tracking, hand detection, hand tracking, and space recognition. The first cameras 265a and 265b may mainly include a global shutter (GS) camera. Since a stereo camera is required for head tracking and spatial recognition, the first cameras 265a and 265b may include two or more GS cameras. A GS camera may have a more excellent performance compared to a rolling shutter (RS) camera, in terms of detecting and tracking a fine movement, such as a quick movement of a hand or a finger. For example, the GS camera may have a low image blur. The first cameras 265a and 265b may capture image data used for a simultaneous localization and mapping (SLAM) function through depth capturing and space recognition for 6DoF. In addition, a user gesture recognition function may be performed based on image data captured by the first camera 265a and 265b.

Second cameras 270a and 270b, which are eye tracking (ET) cameras, may be used to capture image data for detecting and tracking the pupils of the user. The second cameras 270a and 270b will be described below with reference to FIG. 3.

A third camera 245 may be a camera for image capturing. The third camera 245 may include a high-resolution (HR) camera to capture an HR image or a photo video (PV) image. The third camera 245 may include a color camera having functions for obtaining a high-quality image, such as, an automatic focus (AF) function and an optical image stabilizer (OIS). The third camera 245 may be a GS camera or an RS camera.

A fourth camera (e.g., face recognition cameras 425 and 426 of FIG. 4B below) is a face recognition camera, and a face tracking (FT) camera may be used to detect and track facial expressions of the user.

A depth sensor (not shown) may be a sensor configured to sense information for determining a distance to an object such as time of flight (TOF). The TOF is a technology for measuring a distance to an object using a signal (e.g., a near infrared ray, ultrasound, laser, etc.). A depth sensor based on the TOF technique may transmit a signal from a transmitter, may measure the signal in a receiver, and may measure a TOF of the signal.

The light source 230a or 230b (e.g., an illumination module) may include an element (e.g., an LED) emitting light of various wavelengths. The illumination module may be attached to various positions depending on the purpose. For example, a first illumination module (e.g., an LED element) attached to a periphery of a frame of an AR glasses device may emit light for assisting gaze detection when tracking eye movement with an ET camera. The first illumination module may include, for example, an IR LED of an infrared wavelength. For example, a second illumination module (e.g., an LED element) may be attached to a camera mounted on a periphery of a bridge connecting frames to each other or a periphery of a hinge 240a or 240b connecting a frame to a temple. The second illumination module may emit light for supplementing ambient brightness when the camera captures an image. When a subject is not easily detected in a dark environment, the second illumination module may emit light.

A substrate 235a or 235b (e.g., a PCB) may support the aforementioned components.

The PCB may be disposed on a temple of glasses. A flexible PCB (FPCB) may transmit an electrical signal to each module (e.g., a camera, a display, an audio module, and a sensor module) and another PCB. In an embodiment, at least one PCB may include a first substrate, a second substrate, and an interposer disposed between the first substrate and the second substrate. For example, the PCB may be disposed on a central portion of a set. An electrical signal may be transmitted to each module and another PCB through the FPCB.

The other components may include, for example, at least one of a plurality of microphones (e.g., a first microphone 250a, a second microphone 250b, and a third microphone 250c), a plurality of speakers (e.g., a first speaker 255a and a second speaker 255b), a battery 260, an antenna, or a sensor (e.g., an acceleration sensor, a gyro sensor, a touch sensor, etc.).

FIG. 3 illustrates an example of an optical system of an ET camera, a transparent member, and a display according to various embodiments.

FIG. 3 is a diagram illustrating an operation of an ET camera included in an electronic device according to an embodiment. FIG. 3 illustrates a process in which an ET camera 310 (e.g., the first ET camera 270a and second ET camera 270b of FIG. 2) of an electronic device 301 according to an embodiment tracks an eye 309 of a user, e.g., a gaze of the user, using light (e.g., infrared light) output from a display 320 (e.g., the first display 205 and the second display 210 of FIG. 2).

A second camera (e.g., the second cameras 270a and 270b of FIG. 2) may be the ET camera 310 that collects information for positioning a center of a virtual image projected onto the electronic device 301 according to a direction at which pupils of a wearer of the electronic device 301 gaze. The second camera may also include a GS camera to detect the pupils and track a rapid movement of the pupils. The ET cameras may be installed for a right eye and a left eye, and the ET cameras having the same camera performance and specifications may be used. The ET camera 310 may include an eye gaze tracking sensor 315. The ET sensor 315 may be included inside the ET camera 310. The infrared light output from the display 320 may be transmitted as a reflected infrared light 303 to the eye 309 of the user by a half mirror. The ET sensor 315 may detect a transmitted infrared light 305 that is generated when the reflected infrared light 303 is reflected from the eye 309 of the user. The ET camera 310 may track the eye 309 of the user, that is, the gaze of the user, based on a result of the detection by the ET sensor 315.

The display 320 may include a plurality of visible light pixels and a plurality of infrared pixels. The visible light pixels may include R, G, and B pixels. The visible light pixels may output visible light corresponding to a virtual object image. The infrared pixels may output infrared light. The display 320 may include, for example, micro LEDs, or OLEDs.

The display waveguide 350 and an ET waveguide 360 may be included in a transparent member 370 (e.g., the first transparent member 225a and the second transparent member 225b of FIG. 2). The transparent member 370 may be formed as, for example, a glass plate, a plastic plate, or a polymer, and may be transparently or translucently formed. The transparent member 370 may be disposed to face an eye of a user. In this case, a distance between the transparent member 370 and the eye 309 of the user may be referred to as an "eye relief" 380.

The transparent member 370 may include the waveguide 350 and the ET waveguide 360. The transparent member 370 may include the input optical member 330 and the output optical member 340. In addition, the transparent member 370 may include an ET splitter 375 that splits input light into several waveguides.

According to an embodiment, light incident to one end of the display waveguide 350 may be propagated inside the display waveguide 350 by a nanopattern and may be provided to a user. In addition, the display waveguide 350 formed of a free-form prism may provide incident light as an image ray to the user through a reflection mirror. The display waveguide 350 may include at least one of a diffractive element (e.g., a diffractive optical element (DOE) or a holographic optical element (HOE)) or a reflective element (e.g., a reflection mirror). The display waveguide 350 may guide a display light (e.g., the image ray) emitted from the light source to the eyes of the user, using at least one of the diffractive element or the reflective element included in the display waveguide 350. For reference, although FIG. 3 illustrates that the output optical member 340 is separate from the ET waveguide 360, the output optical member 340 may be included in the ET waveguide 360.

According to an embodiment, the diffractive element may include the input optical member 330 and the output optical member 340. For example, the input optical member 330 may refer, for example, to an "input grating region". The output optical member 340 may refer, for example, to an "output grating region". The input grating region may serve as an input end that diffracts (or reflects) light, that is output from a light source (e.g., a micro-LED), to transmit the light to a transparent member (e.g., the first transparent member and the second transparent member) of a screen display portion. The output grating region may serve as an exit that diffracts (or reflects), to the eyes of the user, the light transmitted to the transparent member (e.g., the first transparent member and the second transparent member) of a waveguide.

According to an embodiment, a reflective element may include a total reflection waveguide or a total reflection optical element for total internal reflection (TIR). For example, TIR, which is one of schemes for inducing light, may form an angle of incidence such that light (e.g., a virtual image) entering through the input grating region is completely reflected from one surface (e.g., a specific surface) of the waveguide, to completely transmit the light to the output grating region.

In an embodiment, the light emitted from the display 320 may be guided by the waveguide through the input optical member 330. Light traveling in the waveguide may be guided toward the eyes of the user through the output optical member 340. The screen display portion may be determined based on the light emitted toward the eyes of the user.

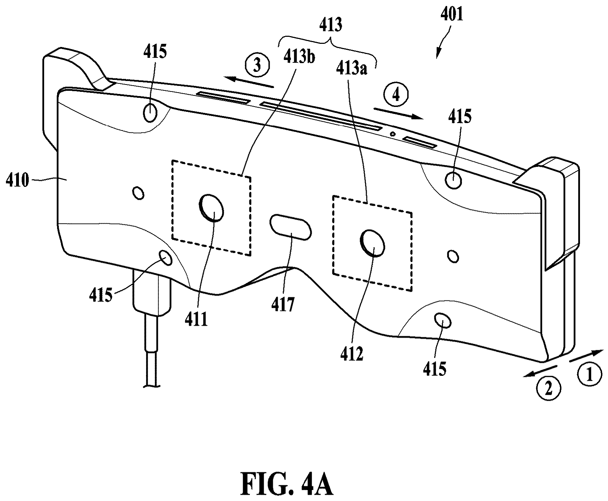

FIGS. 4A and 4B are diagrams illustrating examples of a front view and a rear view of an electronic device according to various embodiments. FIG. 4A may be an appearance of an electronic device 401 viewed in a first direction ①, and FIG. 4B may be an appearance of the electronic device 401 viewed in a second direction ②. When a user wears the electronic device 401, the appearance viewed by the user's eyes may be illustrated in FIG. 4B.

Referring to FIG. 4A, according to various embodiments, the electronic device 401 (e.g., the electronic device 101 of FIG. 1, the electronic device 201 of FIG. 2, or the electronic device 301 of FIG. 3) may provide a service providing an extended reality (XR) experience to the user. For example, XR or XR service may be defined as a service that collectively refers to virtual reality (VR), AR, and/or mixed reality (MR).

According to an embodiment, the electronic device 401 may refer to a head-mounted device or head-mounted display (HMD) worn on a head of the user but may be provided in the form of at least one of glasses, goggles, a helmet, or a hat. The electronic device 401 may include some types such as an OST type configured such that, when being worn, external light reaches the eyes of the user through glasses or a video see-through (VST) type configured such that, when being worn, light emitted from a display reaches the eyes of the user but external light is blocked not to reach the eyes of the user.

According to an embodiment, the electronic device 401 may be worn on the head of the user and provide images related to an XR service to the user. For example, the electronic device 401 may provide XR content (hereinafter, also referred to as an XR content image) that is output such that at least one virtual object appears overlaid in a display region or in a region determined to be a field of view (FoV) of the user. According to an embodiment, the XR content may refer to an image related to a real space obtained through a camera (e.g., an image capturing camera) or an image or video in which at least one virtual object is added to a virtual space. According to an embodiment, the electronic device 401 may provide XR content based on a function being performed by the electronic device 401 and/or a function being performed by at least one or more external electronic devices of external electronic devices (e.g., the electronic devices 102 and 104 of FIG. 1 and the server 108 of FIG. 1).

According to an embodiment, the electronic device 401 may be at least partially controlled by an external electronic device (e.g., the electronic device 102 or 104 of FIG. 1) or may perform at least one function under the control of the external electronic device or perform at least one function independently.

Referring to FIG. 4A, a vision sensor may be disposed on a first surface of a housing of a main body 410 of the electronic device 401. The vision sensor may include cameras (e.g., second function cameras 411 and 412, and first function cameras 415) and/or a depth sensor 417 for obtaining information related to a surrounding environment of the electronic device 401.

In an embodiment, the second function cameras 411 and 412 may obtain images related to the surrounding environment of the electronic device 401. With a wearable electronic device worn by the user, the first function cameras 415 may obtain images. The first function cameras 415 may be used for hand detection and tracking, and recognition of gestures (e.g., hand gestures) of the user. The first function cameras 415 may be used for 3DoF and 6DoF head tracking, position (space, environment) recognition, and/or movement recognition. In an embodiment, the second function cameras 411 and 412 may also be used for hand detection and tracking, and the recognition of user gestures.

In an embodiment, the depth sensor 417 may be configured to transmit a signal and receive a signal reflected from an object and may be used to determine a distance to the object based on a TOF. Alternatively of or additionally, the cameras 411, 412, and 415 may determine the distance to the object in place of the depth sensor 417.

Referring to FIG. 4B, face recognition cameras 425 and 426 and/or a display 421 (and/or a lens) may be disposed on a second surface 420 of the housing of the main body 410.

In an embodiment, the face recognition cameras 425 and 426 adjacent to a display may be used to recognize a face of the user or may recognize and/or track both eyes of the user.

In an embodiment, the display 421 (and/or a lens) may be disposed on the second surface 420 of the electronic device 401. In an embodiment, the electronic device 401 may not include some of the plurality of cameras 415. Although not shown in FIGS. 4A and 4B, the electronic device 401 may further include at least one of the components shown in FIG. 2.

According to an embodiment, the electronic device 401 may include the main body 410 on which at least some of the components of FIG. 1 are mounted, the display 421 (e.g., the display module 160 of FIG. 1) disposed in the first direction ① of the main body 410, the first function camera 415 (e.g., a recognition camera) disposed in the second direction ② of the main body 410, the second function cameras 411 and 412 (e.g., image capturing cameras) disposed in the second direction ②, a third function camera 428 (e.g., an ET camera) disposed in the first direction ①, fourth function cameras 425 and 426 (e.g., face recognition cameras) disposed in the first direction ①, the depth sensor 417 disposed in the second direction ②, and a touch sensor 413 disposed in the second direction ②. Although not shown in the drawings, the main body 410 may include memory (e.g., the memory 130 of FIG. 1) and a processor (e.g., the processor 120 of FIG. 1) therein and may further include other components shown in FIG. 1.

According to an embodiment, the display 421 may include an LCD, a DMD, an LCoS device, an OLED, or a micro-LED.

In an embodiment, when the display 421 is one of an LCD, a DMD, or an LCoS device, the electronic device 401 may include a light source that emits light to a screen output region of the display 421. In another embodiment, when the display 421 is capable of generating light by itself, for example, when the electronic device 401 is formed of one of an OLED or a micro-LED, the electronic device 401 may provide an XR content image with a relatively high quality to the user, even though a separate light source is not included. In an embodiment, when the display 421 is implemented as an OLED or a micro-LED, a light source may be unnecessary, which may lead to lightening of the electronic device 401.

According to an embodiment, the display 421 may include a first transparent member 421a and/or a second transparent member 421b. The user may use the electronic device 401 with it worn on the face. The first transparent member 421a and/or the second transparent member 421b may be formed of a glass plate, a plastic plate, or a polymer, and may be transparently or translucently formed. According to an embodiment, the first transparent member 421a may be disposed to face a left eye of the user in a third direction ③, and the second transparent member 421b may be disposed to face a right eye of the user in a fourth direction ④. According to various embodiments, when the display 421 is transparent, the display 421 may be disposed at a position facing the eyes of the user to form a display region.

According to an embodiment, the display 421 may include a lens including a transparent waveguide. The lens may serve to adjust the focus such that a screen (e.g., an XR content image) output to the display 421 is to be viewed by the eyes of the user. For example, light emitted from a display panel may pass through the lens and be transmitted to the user through the waveguide formed within the lens. The lens may include, for example, a Fresnel lens, a pancake lens, or a multichannel lens.

An optical waveguide (e.g., a waveguide) may serve to transmit a light source generated by the display 421 to the eyes of the user. The optical waveguide may be formed of glass, plastic, or a polymer, and may have a nanopattern formed on a portion of an inner or outer surface, for example, a grating structure of a polygonal or curved shape. According to an embodiment, light incident to one end of the optical waveguide, that is, an output image of the display 421 may be propagated inside the optical waveguide to be provided to the user. In addition, the optical waveguide formed of a free-form prism may provide the incident light to the user through a reflection mirror. The optical waveguide may include at least one of diffraction elements (e.g., a diffractive optical element (DOE) and a holographic optical element (HOE)) or at least one of reflective elements (e.g., a reflection mirror). The optical waveguide may guide an image output from the display 421 to the eyes of the user using the at least one diffractive element or reflective element included in the optical waveguide.

According to an embodiment, the diffractive element may include an input optical member/output optical member (not shown). For example, the input optical member may refer to an input grating region, and the output optical member (not shown) may refer to an output grating region. The input grating region may serve as an input end that diffracts (or reflects) light output from a light source (e.g., a micro-LED) to transmit the light to a transparent member (e.g., the first transparent member 421a and the second transparent member 421b) of the display region. The output grating region may serve as an outlet that diffracts (or reflects) the light transmitted to the transparent member (e.g., the first transparent member and the second transparent member) of the optical waveguide to the eyes of the user.

According to an embodiment, the reflective element may include a TIR optical element or a TIR waveguide for TIR. For example, TIR, which is a scheme for guiding light, may generate an angle of incidence such that light (e.g., a virtual image) input through the input grating region is to be reflected substantially 100% from one surface (e.g., a specific side) of the optical waveguide and the light is to be transmitted substantially 100% up to the output grating region.

In an embodiment, the light emitted from the display 421 may be guided to an optical path to the waveguide through the input optical member. The light traveling inside the optical waveguide may be guided toward the eyes of the user through the output optical member. The display region may be determined based on the light emitted in the direction of the eyes.

According to an embodiment, the electronic device 401 may include a plurality of cameras. For example, the cameras may include the first function camera 415 (e.g., a recognition camera) disposed in the second direction ② of the main body 410, the second function cameras 411 and 412 (e.g., image capturing cameras) disposed in the second direction ②, the third function camera 425 (e.g., an ET camera) disposed in the first direction ①, and the fourth function cameras 425 and 426 (e.g., face recognition cameras) disposed in the first direction ①, and may further include other function cameras (not shown).

The first function camera 415 (e.g., the recognition camera) may be used for a function of detecting a movement of the user or recognizing a gesture of the user. The first function camera 415 may support at least one of head tracking, hand detection and hand tracking, and space recognition. For example, the first function camera 415 may mainly use a GS camera having excellent performance compared to an RS camera to detect and track fine gestures or movements of hands and fingers and may be configured as a stereo camera including two or more GS cameras for head tracking and space recognition. The first function camera 415 may perform functions, such as, 6DoF space recognition, and a SLAM function for recognizing information (e.g., position and/or direction) associated with a surrounding space through depth imaging.

The second function cameras 411 and 412 (e.g., the image capturing cameras) may be used to capture images of the outside, generate an image or video corresponding to the outside, and transmit it to a processor (e.g., the processor 120 of FIG. 1). The processor may display the image provided from the second function cameras 411 and 412 on the display 421. The second function cameras 411 and 412 may also be referred to as an HR or PV camera and may include an HR camera. For example, the second function cameras 411 and 412 may be color cameras equipped with a function for obtaining high-quality images, such as, an AF function and OIS, but are not limited thereto. The second function cameras 411 and 412 may also include a GS camera or an RS camera.

The third function camera 425 (e.g., the ET camera) may be disposed on the display 421 (or inside the main body) such that camera lens faces the eyes of the user when the user wears the electronic device 401. The third function camera 425 may be used for detecting and tracking the pupils (e.g., ET). The processor may verify a gaze direction by tracking movements of the left eye and the right eye of the user in an image received from the third function camera 425. By tracking positions of the pupils in the image, the processor may be configured such that the center of an XR content image displayed on the display region is positioned according to a direction in which the pupils are gazing. For example, the third function camera 425 may use a GS camera to detect the pupils and track the movements of the pupils. The third function camera 425 may be installed for each of the left eye and the right eye and may have the same camera performance and specifications.

The fourth function cameras 425 and 426 (e.g., the face recognition cameras) may be used to detect and track a facial expression of the user (e.g., FT) when the user wears the electronic device 401.

According to an embodiment, the electronic device 401 may include a lighting unit (e.g., LED) (not shown) as an auxiliary means for cameras. For example, the third function camera 425 may use a lighting unit included in a display as an auxiliary means for facilitating gaze detection when tracking eye movements, to direct emitted light (e.g., IR LED of an IR wavelength) toward both eyes of the user. In another example, the second function cameras 411 and 412 may further include a lighting unit (e.g., a flash) as an auxiliary means for supplementing surrounding brightness when capturing an image of the outside.

According to an embodiment, the depth sensor 417 (or a depth camera) may be used to verify a distance to an object (e.g., a target) through, for example, TOF. TOF, which is a technology for measuring a distance to an object using a signal (e.g., near-infrared rays, ultrasound, or laser), may transmit a signal from a transmitter and then measure the signal by a receiver, and may measure a distance to an object based on a TOF of the signal.

According to an embodiment, the touch sensor 413 may be disposed in the second direction ② of the main body 410. For example, when the user wears the electronic device 401, the eyes of the user may view in the first direction ① of the main body. The touch sensor 413 may be implemented as a single type or a left/right separated type based on the shape of the main body 410 but is not limited thereto. For example, in a case in which the touch sensor 413 is implemented as the left/right separated type as shown in FIG. 4A, when the user wears the electronic device 401, a first touch sensor 413a may be disposed at a position corresponding to the right eye of the user in the third direction ③, and a second touch sensor 413b may be disposed at a position corresponding to the left eye of the user in the fourth direction ④.

The touch sensor 413 may recognize a touch input using at least one of, for example, capacitive, resistive, infrared, or ultrasonic method. For example, the touch sensor 413 using the capacitive method may recognize a physical touch (or contact) input or hovering (or proximity) input of an external object. According to some embodiments, the electronic device 401 may use a proximity sensor (not shown) to recognize the proximity to an external object.

According to an embodiment, the touch sensor 413 may have a two-dimensional (2D) surface and transmit, to the processor 120, touch data (e.g., touch coordinates) of an external object (e.g., a finger of the user) contacting the touch sensor 413. The touch sensor 413 may detect a hovering input of an external object (e.g., a finger of the user) approaching within a first distance away from the touch sensor 413 or detect a touch input contacting the touch sensor 413.

In an embodiment, touch sensor 413 may provide two-dimensional information about the contact point to processor 120 as "touch data" when an external object touches touch sensor 413. The touch data may be described as a "touch mode." When the external object is positioned within the first distance from the touch sensor 413 (or hovers above a proximity or touch sensor), the touch sensor 413 may provide hovering data about a time point or position of the external object hovering around the touch sensor 413 to the processor 120. The hovering data may also be described as a "hovering mode/proximity mode."

According to an embodiment, the electronic device 401 may obtain the hovering data using at least one of the touch sensor 413, a proximity sensor (not shown), or/and the depth sensor 417 to generate information about a distance between the touch sensor 413 and an external object, a position, or a time point.

According to an embodiment, the main body 410 may include a processor (e.g., the processor 120 of FIG. 1) and memory (e.g., the memory 130 of FIG. 1) therein.

The memory 130 may store various instructions that may be executed by the processor. The instructions may include control instructions, such as arithmetic and logical operations, data movement, or input/output, which may be recognized by the processor. The memory may include a volatile memory (e.g., the volatile memory 132 of FIG. 1) and a non-volatile memory (e.g., the non-volatile memory 134 of FIG. 1) to store, temporarily or permanently, various pieces of data.

The processor may be operatively, functionally, and/or electrically connected to each of the components of the electronic device 401 to perform control and/or communication-related computation or data processing of each of the components. The operations performed by the processor may be stored in the memory and, when executed, may be executed by the instructions that cause the processor to operate.

Although there will be no limitation to the computation and data processing functions implemented by the processor on the electronic device 401, a series of operations related to an XR content service function will be described hereinafter. The operations of the processor to be described below may be performed by executing the instructions stored in the memory.

According to an embodiment, the processor may generate a virtual object based on virtual information based on image information. The processor may output a virtual object related to an XR service along with background spatial information through the display 421. For example, the processor may obtain image information by capturing an image related to a real space corresponding to an FoV of the user wearing the electronic device 401 through the second function cameras 411 and 412, or generate a virtual space of a virtual environment. For example, the processor may control the display 421 to display XR content (hereinafter, referred to as an XR content screen) that is output such that at least one virtual object appears overlaid in a region of a field of view (FoV) or in a region determined to be a field of view of the user.

According to an embodiment, the electronic device 401 may have a form factor to be worn on the head of the user. The electronic device 401 may further include a strap and/or a wearing member to be fixed on a body part of the user. The electronic device 401 may provide a VR, AR, and/or MR-based user experience while worn on the head of the user.

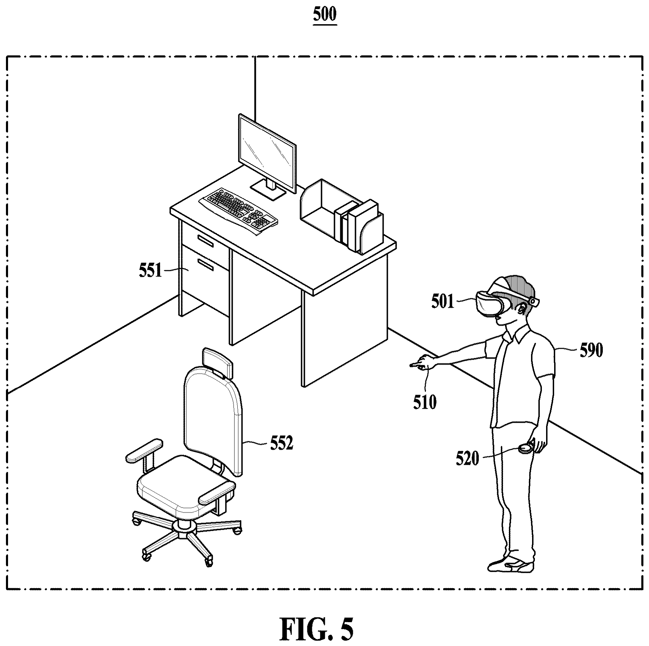

FIG. 5 illustrates an example of construction of a virtual space and input from and output to a user in a virtual space according to various embodiments.

An electronic device (e.g., the electronic device 101 of FIG. 1, the electronic device 201 of FIG. 2, the electronic device 301 of FIG. 3, or the electronic device 401 of FIG. 4B) may obtain spatial information about a physical space in which sensors are located using the sensors. The spatial information may include a geographic location of the physical space in which the sensors are located, a size of the space, an appearance of the space, a position of a physical object 551 disposed in the space, a size of the physical object 551, an appearance of the physical object 551, and illuminant information. The appearance of the space and the physical object 551 may include at least one of a shape, a texture, or a color of the space and the physical object 551. The illuminant information, which is information about a light source that emits light acting in the physical space, may include at least one of an intensity, a direction, or a color of illumination. The sensor described above may collect information to provide AR. For example, with reference to the AR device illustrated in FIGS. 2, 3, 4A, and 4B, the sensor may include a camera and a depth sensor. However, the example is not limited thereto and the sensor may further include at least one of an infrared sensor, a depth sensor (e.g., a lidar sensor, a radar sensor, or a stereo camera), a gyro sensor, an acceleration sensor, or a geomagnetic sensor.

An electronic device 501 may collect spatial information over multiple time frames. For example, in each time frame, the electronic device 501 may collect information about a space of a portion belonging to a scene within a sensing range (e.g., a FoV) of a sensor at a position of the electronic device 501 in the physical space. The electronic device 501 may analyze the spatial information of the time frames to track a change (e.g., a position movement or state change) of an object over time. The electronic device 501 may integrally analyze the spatial information collected through the plurality of sensors to obtain integrated spatial information (e.g., an image obtained by spatially stitching scenes around the electronic device 501 in the physical space) of an integrated sensing range of the plurality of sensors.

The electronic device 501 may analyze the physical space as three-dimensional (3D) information, using various input signals (e.g., sensing data of an RGB camera, an infrared sensor, a depth sensor, or a stereo camera) of the sensors. For example, the electronic device 501 may analyze at least one of the shape, the size, or the position of the physical space, and the shape, the size, or the position of the physical object 551.

For example, the electronic device 501 may detect an object captured in a scene corresponding to an FoV of a camera, using sensing data (e.g., a captured image) of the camera. The electronic device 501 may determine a label of the physical object 551 (e.g., as information indicating classification of an object, including values indicating a chair, a monitor, or a plant) from a 2D scene image of the camera and a region (e.g., a bounding box) occupied by the physical object 551 in the 2D scene. Accordingly, the electronic device 501 may obtain 2D scene information from a position at which a user 590 is viewing. In addition, the electronic device 501 may also calculate a position of the electronic device 501 in the physical space based on the sensing data of the camera.

The electronic device 501 may obtain position information of the user 590 and depth information of a real space in a viewing direction using sensing data (e.g., depth data) of a depth sensor. The depth information may be information indicating a distance from the depth sensor to each point and may be expressed in the shape of a depth map. The electronic device 501 may analyze a distance of each pixel unit from a 3D position viewed by the user 590.

The electronic device 501 may obtain information including a 3D point cloud and a mesh using various sensing data. The electronic device 501 may obtain a plane, a mesh, or a 3D coordinate point cluster that configures the space by analyzing the physical space. The electronic device 501 may obtain a 3D point cloud representing physical objects based on the information obtained as described above.

The electronic device 501 may obtain information including at least one of 3D position coordinates, 3D shapes, or 3D sizes (e.g., 3D bounding boxes) of the physical objects arranged in the physical space by analyzing the physical space.

Accordingly, the electronic device 501 may obtain physical object information detected in the 3D space and semantic segmentation information about the 3D space. The physical object information may include at least one of a position, an appearance (e.g., a shape, texture, and color), or a size of the physical object 551 in the 3D space. The semantic segmentation information, which is information obtained by semantically segmenting the 3D space into subspaces, may include, for example, information indicating that the 3D space is segmented into an object and a background and information indicating that the background is segmented into a wall, a floor, and a ceiling. As described above, the electronic device 501 may obtain and store 3D information (e.g., spatial information) about the physical object 551 and the physical space. The electronic device 501 may store 3D position information of the user 590 in the space, along with the spatial information.

The electronic device 501 in an embodiment may build a virtual space 500 based on a physical position of the user 590 and/or the electronic device 501. The electronic device 501 may generate the virtual space 500 by referring to the spatial information described above. The electronic device 501 may generate the virtual space 500 of the same scale as the physical space based on the spatial information and arrange objects in the generated virtual space 500. The electronic device 501 may provide a complete VR to the user 590 by outputting an image that substitutes the entire physical space. The electronic device 501 may provide MR or AR by outputting an image that substitutes a portion of the physical space. Although the construction of the virtual space 500 based on the spatial information obtained by the analysis of the physical space has been described, the electronic device 501 may also construct the virtual space 500 irrespective of the physical position of the user 590. Herein, the virtual space 500 may be a space corresponding to AR or VR and may be referred to as a metaverse space.

For example, the electronic device 501 may provide virtual graphic representation substituting at least a partial space of the physical space. The electronic device 501 based on OST may output virtual graphic representation by overlaying the virtual graphic representation on a screen region corresponding to the at least partial space in the screen display portion. The electronic device 501 based on VST may output an image that is generated by substituting, with virtual graphic representation, an image region corresponding to at least a partial space in a spatial image that corresponds to a physical space and is rendered based on spatial information. The electronic device 501 may substitute at least a portion of a background in the physical space with a virtual graphic representation, but embodiments are not limited thereto. The electronic device 501 may only additionally arrange a virtual object 552 in the virtual space 500 based on the spatial information, without changing the background.

The electronic device 501 may arrange and output the virtual object 552 in the virtual space 500. The electronic device 501 may set a manipulation region for the virtual object 552 in a space occupied by the virtual object 552 (e.g., a volume corresponding to an appearance of the virtual object 552). The manipulation region may be a region in which a manipulation of the virtual object 552 occurs. In addition, the electronic device 501 may substitute the physical object 551 with the virtual object 552 and output the virtual object 552. The virtual object 552 corresponding to the physical object 551 may have the same or similar shape as or to the corresponding physical object 551. However, embodiments are not limited thereto, and the electronic device 501 may set only the manipulation region in a space occupied by the physical object 551 or at a position corresponding to the physical object 551, without outputting the virtual object 552 that substitutes the physical object 551. That is, the electronic device 501 may transmit, to the user 590, visual information representing the physical object 551 (e.g., light reflected from the physical object 551 or an image obtained by capturing the physical object 551) as it is without a change and set the manipulation region in the corresponding physical object 551. The manipulation region may be set to have the same shape and volume as the space occupied by the virtual object 552 or the physical object 551 but is not limited thereto. The electronic device 501 may set the manipulation region that is smaller than the space occupied by the virtual object 552 or the space occupied by the physical object 551.

According to an embodiment, the electronic device 501 may arrange a virtual object (not shown) (e.g., an avatar object) representing the user 590 in the virtual space 500. When the avatar object is provided in a first-person view, the electronic device 501 may provide a visualized graphic representation corresponding to a portion of the avatar object (e.g., a hand, a torso, or a leg) to the user 590 via the display described above (e.g., an OST display or a VST display). However, embodiments are not limited thereto, and when the avatar object is provided in a third-person view, the electronic device 501 may provide a visualized graphic representation corresponding to an entire shape (e.g., a back view) of the avatar object to the user 590 via the display described above. The electronic device 501 may provide the user 590 with an experience integrated with the avatar object.

In addition, the electronic device 501 may provide an avatar object of another user who enters the same virtual space 500. The electronic device 501 may receive feedback information that is the same or similar to feedback information (e.g., information based on at least one of visual, auditory, or tactile sensation) provided to another electronic device 501 entering the same virtual space 500. For example, when an object is arranged in a certain virtual space 500 and a plurality of users access the virtual space 500, respective electronic devices 501 of the plurality of users 590 may receive feedback information (e.g., a graphic representation, a sound signal, or haptic feedback) of the same object arranged in the virtual space 500 and provide the feedback information to each user 590.

The electronic device 501 may detect an input to an avatar object of another electronic device (not shown) and may receive feedback information from the avatar object of the other electronic device. Exchange of feedback and an input for each virtual space 500 may be performed by a server (e.g., the server 108 of FIG. 1). For example, the server (e.g., a server providing a metaverse space) may transmit, to the users 590, inputs and feedback between the avatar object of the user 590 and an avatar object of another user 590. However, embodiments are not limited thereto, and the electronic device 501 may establish direct communication with another electronic device to provide an input based on an avatar object or receive feedback, not via the server.

For example, based on detecting a user input that selects a manipulation region, the electronic device 501 may determine that the physical object 551 corresponding to the selected manipulation region is selected by the user 590. An input of the user 590 may include at least one of a gesture input made using a body part (e.g., a hand or eye), an input made using a separate VR accessory device, or a voice input of the user.

The gesture input may be an input corresponding to a gesture identified by tracking a body part 510 of the user 590 and may include, for example, an input indicating or selecting an object. The gesture input may include at least one of a gesture by which a body part (e.g., a hand) moves toward an object for a predetermined period or more, a gesture by which a body part (e.g., a finger, an eye, or a head) points at an object, or a gesture by which a body part and an object contact each other spatially. A gesture of pointing at an object with an eye may be identified based on ET. A gesture of pointing at an object with a head may be identified based on head tracking.

Tracking the body part 510 of the user 590 may be mainly performed based on a camera of the electronic device 501 but is not limited thereto. The electronic device 501 may track the body part 510 based on cooperation with sensing data (e.g., image data of a camera and depth data of a depth sensor) of a vision sensing data and information (e.g., controller tracking and finger tracking in a controller) collected by an accessory device described below. Finger tracking may be performed by sensing a distance or a contact between an individual finger and a controller based on a sensor (e.g., an infrared sensor) embedded in the controller.

An accessory device for VR may include a ride-on device, a wearable device, a controller device 520, or other sensor-based devices. The ride-on device may be a device that the user 590 rides and manipulates and may include, for example, at least one of a treadmill-type device or a chair-type device. The wearable device may be a manipulation device worn on at least a part of the body of the user 590 and may include, for example, at least one of a full or half body suit-type controller, a vest-type controller, a shoe-type controller, a bag-type controller, a glove-type controller (e.g., a haptic glove), or a facial mask-type controller. The controller device 520 may include, for example, an input device (e.g., a stick-type controller or a gun) manipulated by a hand, a foot, a toe, or other body parts 510.

The electronic device 501 may track at least one of a position or a movement of the accessory device by directly establishing communication with the accessory device, but the example is not limited thereto. The electronic device 501 may communicate with the accessory device via a base station for VR.

For example, the electronic device 501 may determine that the virtual object 552 is selected, based on detecting an act of gazing at the virtual object 552 for a predetermined period or more through an eye gaze tracking technology described above. In another example, the electronic device 501 may recognize a gesture of pointing at the virtual object 552 through a hand tracking technology. The electronic device 501 may determine that the virtual object 552 is selected, based on that a direction in which a tracked hand points indicates the virtual object 552 for a predetermined period or more or that a hand of the user 590 contacts or enters a region occupied by the virtual object 552 in the virtual space 500.

The voice input of the user, which is an input corresponding to a user's voice obtained by the electronic device 501, may be sensed by, for example, an input module (e.g., a microphone) of the electronic device 501 or may include voice data received from an external electronic device of the electronic device 501. By analyzing the voice input of the user, the electronic device 501 may determine that the physical object 551 or the virtual object 552 is selected. For example, based on detecting a keyword indicating at least one of the physical object 551 or the virtual object 552 from the voice input of the user, the electronic device 501 may determine that at least one of the physical object 551 or the virtual object 552 corresponding to the detected keyword is selected.

The electronic device 501 may provide feedback to be described below as a response to the input of the user 590 described above.

The feedback may include visual feedback, auditory feedback, haptic feedback, olfactory feedback, or gustatory feedback. The feedbacks may be rendered by the server 108, the electronic device 101, or the external electronic device 102 described with reference to FIG. 1.

The visual feedback may include an operation of outputting an image through a display (e.g., a transparent display or an opaque display) of the electronic device 501.

The auditory feedback may include an operation of outputting sound through a speaker of the electronic device 501.

The haptic feedback may include force feedback that simulates a weight, a shape, texture, a dimension, and dynamics. For example, a haptic glove may include a haptic element (e.g., an electronic muscle) for simulating tactile sensation by tensing and relaxing the body of the user 590. The haptic element in the haptic glove may function as a tendon. The haptic glove may provide haptic feedback to the entire hand of the user 590. The electronic device 501 may provide feedback that represents a shape, a size, and stiffness of an object through the haptic glove. For example, the haptic glove may generate a force that simulates a shape, a size, and stiffness of an object. The exoskeleton of the haptic glove (or a suit-type device) may include a sensor and a finger movement measurement device, may transmit a cable-pulling force (e.g., an electromagnetic, direct current (DC) motor-based, or pneumatic force) to fingers of the user 590, and may thereby transmit tactile information to the body. Hardware providing haptic feedback may include a sensor, an actuator, a power, and a wireless transmission circuit. The haptic glove may operate by inflating and deflating an inflatable air bladder on a surface of the glove.

Based on an object in the virtual space 500 being selected, the electronic device 501 may provide feedback to the user 590. For example, the electronic device 501 may output a graphic representation (e.g., a representation of highlighting the selected object) indicating the selected object through the display. For example, the electronic device 501 may output a sound (e.g., a voice) notifying the selected object through a speaker. In another example, the electronic device 501 may transmit an electrical signal to a haptic supporting accessory device (e.g., the haptic glove) and may thereby provide a haptic movement that simulates a tactile sensation of a corresponding object to the user 590.

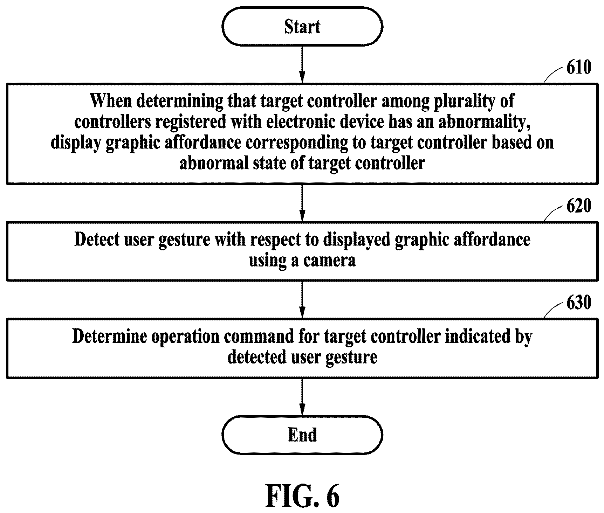

FIG. 6 is a flowchart schematically illustrating a process of determining an operation command for a controller according to various embodiments.

An electronic device (e.g., the electronic device 101 of FIG. 1, the electronic device 201 of FIG. 2, the electronic device 301 of FIG. 3, the electronic device 401 of FIG. 4B, or the electronic device 501 of FIG. 5) according to an embodiment may be worn on the user. The electronic device may be an extended reality device (an XR device). The XR device may include all of a VR device, AR device, and MR device.

The electronic device may construct a virtual space (e.g., the virtual space 500 of FIG. 5) based on a physical location of the electronic device and/or a user and arrange virtual objects in the virtual space. The electronic device may be communicatively connected to one or more handheld controllers including buttons and sensors (hereinafter, "controllers") to interact with virtual objects arranged in the virtual space. The controller may detect a user's operation and transmit an operation command for the controller corresponding to the detected user's operation to the electronic device. The electronic device may communicate individually with a plurality of controllers and receive operation commands separately from each of the plurality of controllers.

In an embodiment, the electronic device may display graphic affordances corresponding to the plurality of controllers on a display screen. A graphic affordance may represent a user interaction graphical user interface (GUI) object displayed on the display of the electronic device. Generally, the electronic device may determine and display the shape and size of a graphic affordance corresponding to a controller to be the same as the shape and size of the controller in real space, but embodiments are not limited thereto. The electronic device may determine the shape and size of a graphic affordance to be different from the shape and size of the controller in real space.

In another embodiment, instead of displaying graphic affordances corresponding to the plurality of controllers on the display screen, the electronic device may use a camera to capture (real-time) images of the plurality of controllers and display the images on the display screen.

In another embodiment, the electronic device may display information (e.g., battery information) about the plurality of controllers on the display screen, without displaying graphic affordances or images corresponding to the plurality of controllers.

In an embodiment, when the electronic device determines that a controller has an abnormality, the electronic device may display, on the display screen, a graphic affordance corresponding to the controller based on the abnormal state of the controller. A method of displaying a graphic affordance corresponding to a controller based on an abnormal state of the controller is briefly described below.

In operation 610, when the electronic device determines that a target controller among the plurality of controllers registered with the electronic device has an abnormality, the electronic device may display a graphic affordance corresponding to the target controller based on the abnormal state of the target controller.

In an embodiment, the electronic device may establish communication with the plurality of controllers and register the plurality of controllers. The electronic device may determine individually whether each of the plurality of controllers has an abnormality.

In an embodiment, the electronic device may display, on the display screen, a graphic affordance corresponding to the target controller that is determined to have an abnormality among the plurality of controllers.

For example, the electronic device may be displaying an existing graphic affordance for the target controller. When the electronic device determines that the target controller has an abnormality, the existing graphic affordance for the target controller may be transformed based on the abnormal state of the target controller.

For another example, the electronic device may be displaying an image captured for the target controller. When the electronic device determines that the target controller has an abnormality, a graphic affordance based on the abnormal state may be overlaid onto an image capturing the target controller.

For another example, the electronic device may not be displaying an existing graphic affordance for the target controller or an image capturing the target controller. In this case, the electronic device may newly generate and display a graphic affordance corresponding to the target controller based on the abnormal state of the target controller.

In an embodiment, for the target controller that is determined to have an abnormality, the electronic device may determine an operation command for the target controller indicated by a user gesture using a graphic affordance displayed corresponding to the target controller. On the other hand, the electronic device may directly receive operation commands for the remaining controllers that do not have an abnormality.

In operation 620, the electronic device may detect a user gesture with respect to the displayed graphic affordance using a camera that captures the user gesture.

In an embodiment, when the electronic device determines that the target controller has an abnormality, the electronic device may turn on a pass-through camera (e.g., the first camera 265a or 265b of FIG. 1 or the function camera 415 of FIG. 4A) that may capture a user gesture. The electronic device may detect a user gesture with respect to a graphic affordance displayed corresponding to the target controller. A user gesture may include, for example, a gesture corresponding to pressing a button of a controller, a gesture corresponding to rotating the controller, or a gesture corresponding to touching a touch sensor of the controller.

In operation 630, the electronic device may determine an operation command for the target controller indicated by the detected user gesture.

In an embodiment, the electronic device may determine an operation command for the target controller indicated by a user gesture with respect to the graphic affordance and may receive the determined operation command for the target controller as an input signal. Also, the electronic device may perform an operation according to the determined operation command for the target controller. In other words, the electronic device may receive, as an input signal, an operation command for the target controller indicated by a user gesture with respect to the transformed graphic affordance, such that even when some elements (e.g., a button, a touch sensor, or a gyro sensor) included in the target controller do not operate, the user may still transmit a controller operation command based on the non-operating elements to the electronic device.

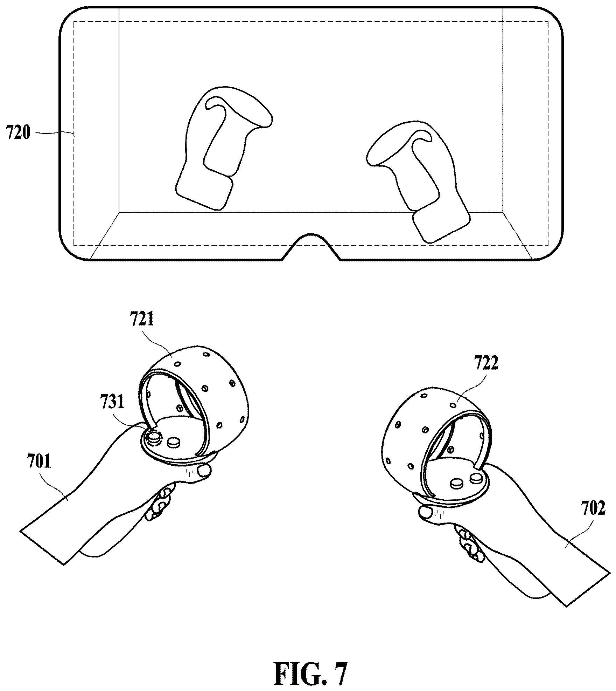

FIG. 7 illustrates a situation in which a user uses a plurality of controllers according to various embodiments.

In an embodiment, the electronic device may establish communication individually with a plurality of controllers 721 and 722. The electronic device may register the plurality of controllers 721 and 722 with the electronic device by establishing communication individually with each of the plurality of controllers 721 and 722. The controller 721 may be designed to be operated with a left hand 701 of a user, and the controller 722 may be designed to be operated with a right hand 702 of the user.

In an embodiment, the electronic device may generate a virtual space and arrange virtual objects in the virtual space. The electronic device may display a VR image 720 corresponding to the virtual space on a display screen.

In an embodiment, the electronic device may determine individually whether each of the plurality of controllers 721 and 722 has an abnormality. The electronic device may determine whether a controller (e.g., the controller 721) has an abnormality based on a signal received from the controller.

In an embodiment, the electronic device may determine that the plurality of controllers 721 and 722 is not in an abnormal state. In other words, the electronic device may determine that the plurality of controllers 721 and 722 are operating normally. In this case, as illustrated in FIG. 7, the electronic device may not display, on the display screen, a graphic affordance corresponding to a controller (e.g., the controller 721 or the controller 722) or an image of the controller captured by the electronic device.

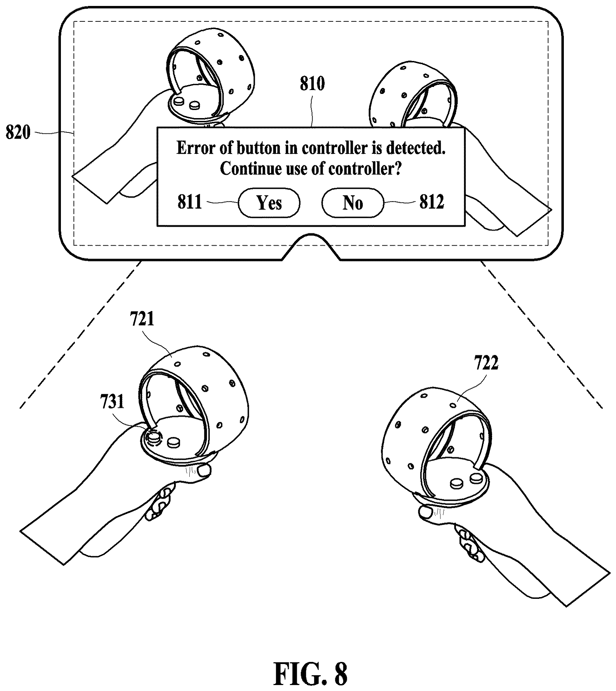

In an embodiment, the electronic device may determine that the controller 721 has an abnormality. For example, the electronic device may detect an operational error of a button 731 included in the controller 721 based on a signal received from the controller 721. When the electronic device determines that the controller 721 has an abnormality, the electronic device may display, based on the abnormal state, a graphic affordance (not shown) corresponding to the controller 721. A method of displaying a graphic affordance (not shown) corresponding to the controller 721 based on the abnormal state of the controller 721 is described in more detail with reference to FIGS. 8, 9A, 9B, and 10.

FIG. 8 is a diagram illustrating a case in which an electronic device detects an operational error of a button included in a controller according to embodiments.

In an embodiment, the electronic device may determine an abnormal state of the controller 721 based on a signal received from the controller 721. The abnormal state of the controller 721 may manifest in various ways. For example, types of abnormal states of a controller may include an operational error of a button included in the controller, an operational error of a touch sensor included in the controller, an operational error of a tracking sensor included in the controller, or an operational error of a gyro sensor included in the controller.

In an embodiment, when the electronic device determines that the controller 721 has an abnormality, the electronic device may display, on a display screen, a graphic affordance corresponding to the controller 721 based on the abnormal state of the controller 721. The electronic device may display the graphic affordance corresponding to the controller 721 in different ways depending on the type of the abnormal state of the controller 721.

Referring to FIG. 8, when the electronic device determines that the controller 721 has an abnormality, the electronic device may turn on a camera that captures a controller (e.g., the controller 721 or the controller 722) and a user gesture, and may display, on the screen, an image 820 of the controller. When the electronic device determines that the controller 721 has an abnormality while displaying a VR image on the screen, the electronic device may display an AR image on the screen instead of the VR image.

In addition, the electronic device may display, on the screen, an interface object 810 including information indicating that the controller 721 has an abnormality.

In an embodiment, when the electronic device receives user input selecting an interface object 811 that requests use of the controller 721 determined to have an abnormality, the electronic device may display, on the screen, the graphic affordance corresponding to the controller 721. On the other hand, when the electronic device receives user input selecting an interface object 812 that requests termination of the use of the controller 721 determined to have an abnormality, the electronic device may terminate communication between the controller 721 and the electronic device and may not display the graphic affordance corresponding to the controller 721. Hereinafter, a case in which a user requests use of the controller 721 determined to have an abnormality is mainly described.

In an embodiment, the electronic device may detect an operational error of the button 731 included in the controller 721 based on a signal received from the controller 721. The button 731 included in the controller 721 may detect physical pressure from a user and generate an electric signal to transmit, to a processor of the controller 721, whether the button 731 has been pressed. Operational errors of the button 731 may include various types of errors, such as a press detection error in which the button 731 fails to detect physical pressure from a user due to a defect in a button sensor included in the button 731, or a sensitivity adjustment error in which the button 731 fails to accurately detect the physical pressure from the user due to the sensitivity of the button 731 not being accurately adjusted. However, the types of operational errors of the button 731 are not limited thereto.

The controller 721, when detecting an operational error of the button 731, may notify the electronic device of the operational error of the button 731. Hereinafter, a method by which the controller 721 determines an operational error of the button 731 included in the controller 721 is described as an example. For example, the controller 721 may track a position of a user's hand manipulating the controller 721 using a tracking sensor (hereinafter, "user hand tracking"). The controller 721 may determine whether the user has physically pressed the button 731 through user hand tracking. For example, the controller 721 may determine whether the user's finger has contacted an upper surface of the button 731 by performing user hand tracking and may determine whether the user has physically pressed the button 731 by determining whether the finger contacting the upper surface of the button 731 has performed a bending movement. The controller 721 when determining, through user hand tracking, that the user has physically pressed the button 731, but the button 731 fails to detect physical pressure from the user, may determine that an operational error has occurred in the button 731. The controller 721, when determining that an operational error of the button 731 has occurred, may transmit to the electronic device that the operational error of the button 731 has occurred.

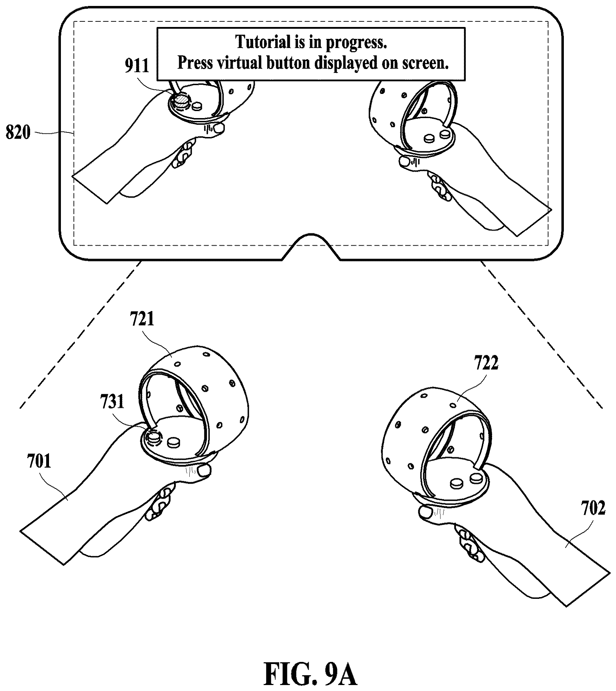

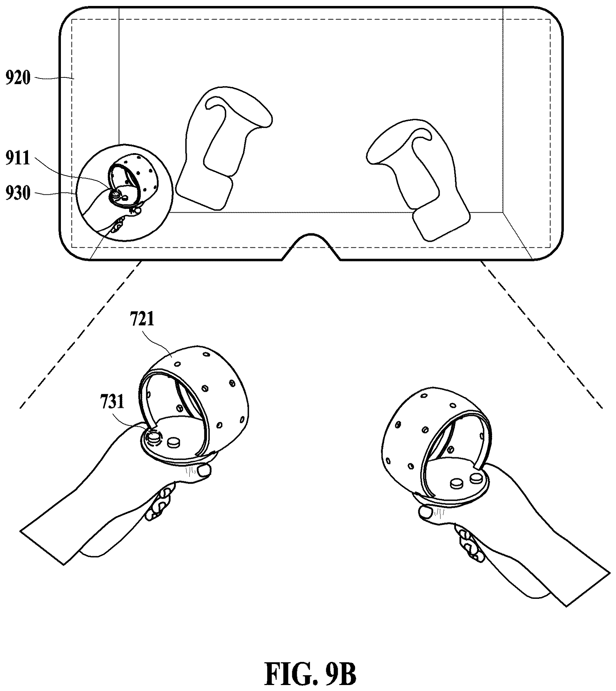

FIGS. 9A and 9B are diagrams illustrating a process in which an electronic device displays a graphic affordance corresponding to a controller when the electronic device detects an operational error of a button included in the controller according to various embodiments.

In an embodiment, the electronic device may determine that the controller 721 has an abnormality. For example, the electronic device may detect an operational error of the button 731 included in the controller 721. The electronic device may receive user input selecting an interface object (e.g., the interface object 811 of FIG. 8) that requests use of the controller 721 determined to have an abnormality.

Referring to FIG. 9A, the electronic device may display, on a display screen, a graphic affordance 911 corresponding to the controller 721.

In an embodiment, the electronic device may overlay a graphic affordance 911 corresponding to the controller 721 onto the image 820 capturing the controller 721. In this case, the electronic device may generate, as the graphic affordance 911 corresponding to the controller 721, a graphic affordance for the button 731 that is determined to have an abnormality. In other words, the electronic device may generate the graphic affordance 911 that replaces a portion of the controller 721. When the electronic device detects an operational error of the button 731 included in the controller 721, the electronic device may display the graphic affordance 911 having an increased size compared to at least one of a width and a height of the button 731 in the image 820 capturing the controller 721.

In another embodiment, the electronic device may generate and display a graphic affordance (not shown) that replaces the entire controller 721, rather than displaying the image 820 capturing the controller 721. In this case, the electronic device may display, in addition to a graphic affordance for an accessory (e.g., the button 731) determined to have an abnormality in the controller 721, graphic affordances for other accessories (e.g., a trigger of the controller or grip buttons of the controller). In this case, the electronic device may detect the operational error of the button 731 included in the controller 721. In this case, the electronic device may display graphic affordances for other accessories not having any operational error in the controller 721 corresponding to shapes of the other accessories appearing in the image 820, while displaying a graphic affordance for the button 731 having an operational error in the controller 721 by increasing at least one of a width and a height of the button 731 appearing in the image 820.

In an embodiment, when the electronic device receives user input selecting an interface object (e.g., the interface object 811 of FIG. 8) that requests use of the controller 721, the electronic device may provide a tutorial screen for performing a user gesture to operate a button 731 having an error in the controller 721. The electronic device may display the graphic affordance 911 corresponding to the controller 721, may determine whether a user gesture with respect to the graphic affordance 911 indicates an input of the button 731, and may provide a determination result to a user. In this case, the electronic device may keep a camera turned on to recognize user gestures.

In an embodiment, the electronic device may determine whether the user has pressed the button 731 by detecting a user gesture with respect to the graphic affordance 911 using a camera. A camera (e.g., the first camera 265a or 265b of FIG. 1 or the function camera 415 of FIG. 4A) may detect a user gesture. A camera may be used for real-world space recognition and user hand tracking.

In an embodiment, the electronic device may determine more easily whether a user gesture indicates an input of the button 731 by displaying the graphic affordance 911 having an increased size compared to at least one of a width and a height of the button 731 in the image 820. The electronic device may detect a user gesture with respect to the graphic affordance 911 and may determine whether the detected user gesture indicates an input of the button 731 included in the controller 721. For example, when the electronic device determines that a distance by which a finger of the user's left hand 701 moves downward after contacting an upper surface of the button 731 is greater than a threshold distance, the electronic device may determine that the user gesture indicates an input of a button 731.

The electronic device may display the graphic affordance 911 having an increased size compared to the width of the button 731 in the image 820. In this case, the electronic device may determine more easily whether the finger (e.g., an index finger) of the user's left hand 701 overlays an upper surface of the button 731. The electronic device may display the graphic affordance 911 having an increased size compared to the height of the button 731 in the image 820. In this case, the electronic device may determine more easily whether the finger (e.g., the index finger) of the user's left hand 701 has pressed the button 731. This is because, when the graphic affordance 911 having an increased height of the button 731 is displayed on the screen, the user is expected to move a finger (e.g., a thumb) further downward to perform a pressing operation of the button 731.

The electronic device may determine that the user gesture indicates an input of the button 731 when the electronic device determines that the user gesture performs a pressing operation of the button 731. The electronic device may receive, as an input signal, an operation command for the button 731 of the controller 721 when a user gesture indicates an input of the button 731. In addition, the electronic device may perform an operation according to the operation command for the button 731.

Referring to FIG. 9B, the electronic device may display a VR image 920 on the screen again to allow the user to enter a virtual space after providing a tutorial screen for performing an operation command for the button 731 having an error in the controller 721 using a user gesture. In this case, the electronic device may display, on the screen, the VR image 920 together with an AR image 930 including the graphic affordance 911 corresponding to the controller 721. For example, the AR image 930 may be an image in which the graphic affordance 911 corresponding to the controller 721 is overlaid onto a region corresponding to the controller 721 and the user's hand 701 manipulating the controller 721 in an image (e.g., the image 920 of FIG. 9A). The electronic device may display the VR image 920 and the AR image 930 together on the screen in a picture-in-picture (PIP) manner. The electronic device may provide a virtual space to the user by displaying the VR image 920 and the AR image 930 together on the screen, while assisting the user in performing a gesture to generate an operation command for the button 731 in which an error has occurred.

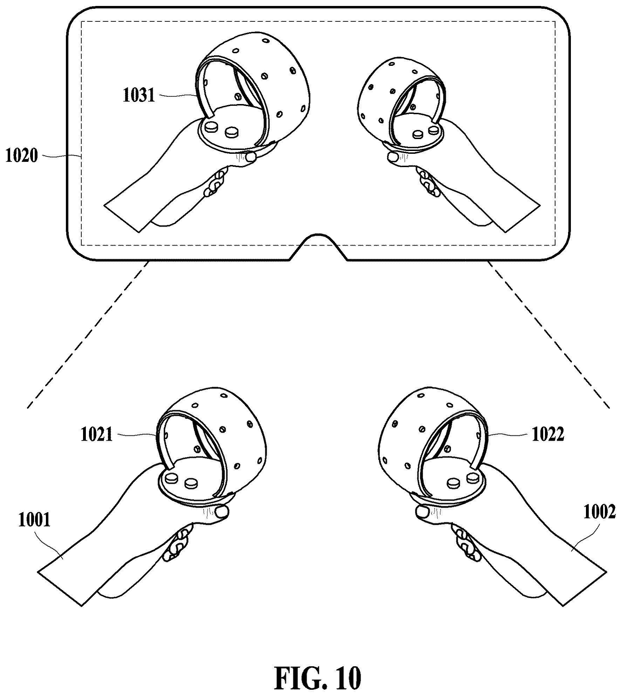

FIG. 10 is a diagram illustrating a process in which an electronic device displays a graphic affordance having an increased size for a controller according to various embodiments.

In an embodiment, the electronic device may detect an operational error of a gyro sensor (not shown) included in a controller 1021 based on a signal received from the controller 1021. The gyro sensor included in the controller 1021 may detect rotational movement of a user's hand 1001 manipulating the controller 1021. More particularly, the gyro sensor included in the controller 1021 may measure a rotation speed, a rotation direction, and a rotation amount of the controller 1021. The controller 1021 may determine rotational movement of the user's hand 1001 based on the measured rotation speed, rotation direction, and rotation amount. The controller 1021 may transmit, in real time, information about rotational movement, measured by the gyro sensor, of the user's hand 1001 manipulating the controller 1021, to the electronic device. In this case, the electronic device may detect an operational error of the gyro sensor included in the controller 1021 by the electronic device itself or may receive, from the controller 1021, a signal indicating that an operational error of the gyro sensor has occurred. For example, when the electronic device fails to receive information about rotational movement of the user's hand 1001 from the controller 1021, the electronic device may determine that an operational error has occurred in the gyro sensor included in the controller 1021.

In an embodiment, the electronic device may display a graphic affordance 1031 having an increased size for the controller 1021. Referring to FIG. 10, the electronic device may generate and display a graphic affordance 1031 that replaces the entire controller 1021. The electronic device may display, on a screen, an image 1020 capturing the controllers 1021 and 1022 and the user's hands 1001 and 1002 manipulating the controllers 1021 and 1022. The electronic device may remove a region corresponding to the controller 1021 from the image 1020 and may overlay a graphic affordance 1031 corresponding to the controller 1021. The electronic device may generate a graphic affordance 1031 that replaces the entire controller 1021. When the electronic device detects an operational error of the gyro sensor included in the controller 1021, the electronic device may display the graphic affordance 1031 having an increased size compared to the controller 1021 in the image 1020 capturing the controller 1021.

In an embodiment, the electronic device may detect a user gesture with respect to the graphic affordance 1031 and may determine whether the detected user gesture indicates an operation related to rotation of a controller 1021.

In an embodiment, the electronic device may calculate a rotation speed, a rotation direction, and a rotation amount of the user's hand 1001 based on a detected user gesture. The electronic device may determine, based on the calculated rotation speed, rotation direction, and rotation amount, whether a user gesture indicates an operation (e.g., a scroll operation, a flick operation, or a swing operation) related to rotation of the controller 1021. For example, the electronic device may determine that the user gesture indicates an operation related to rotation of the controller 1021 when the rotation speed and rotation amount of the user's hand 1001 are greater than or equal to a threshold speed and a threshold amount.

In an embodiment, the electronic device may determine more easily whether a user gesture indicates an operation related to rotation of the controller 1021 by displaying, on a display screen, a graphic affordance 1031 having an increased size compared to the controller 1021. As described above, the electronic device may determine that a user gesture indicates an operation related to rotation of the controller 1021 when the rotation speed and rotation amount of the user's hand 1001 are greater than or equal to a threshold speed and a threshold amount. Since the electronic device displays, on the screen, a graphic affordance 1031 having an increased size compared to the controller 1021, a user looking at the graphic affordance 1031 may increase a rotation speed and a rotation amount of the user's hand 1001 to rotate the graphic affordance 1031 corresponding to the controller 1021, compared to when a graphic affordance having a size equal to that of the controller 1021 is displayed. In other words, when the user intends to perform an operation related to rotation of the controller 1021, a rotation speed and a rotation amount of the user's hand 1001 may increase, and the electronic device may determine more easily whether the user gesture indicates an operation related to rotation of the controller 1021.

Furthermore, for user convenience, when the electronic device detects an operational error of the gyro sensor included in the controller 1021, the electronic device may display, as a graphic object on the display screen, information about a rotation speed and a rotation amount required to perform an operation related to rotation of the controller 1021.

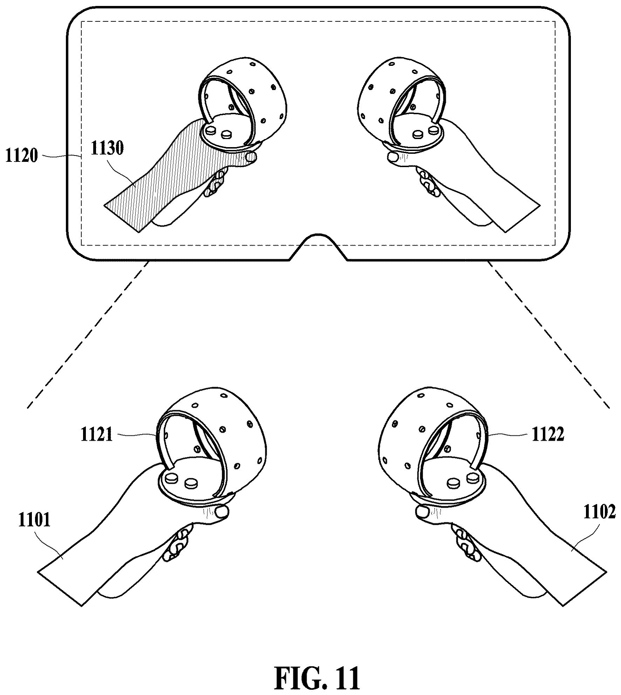

FIG. 11 is a diagram illustrating a process of tracking a user's hand when an electronic device detects an operational error of a tracking sensor included in a controller according to various embodiments.

In an embodiment, the electronic device may detect an operational error of a tracking sensor included in the controller 1121 based on a signal received from the controller 1121. The tracking sensor included in the controller 1121 may track the position of the user's hand 1101 manipulating the controller 1121. The controller 1121 may transmit, in real time, position information, measured by the tracking sensor, of the user's hand 1101 manipulating the controller 1121 to the electronic device. In this case, the electronic device may detect an operational error of the tracking sensor included in the controller 1121 by itself or may receive, from the controller 1121, a signal indicating an operational error of the tracking sensor. For example, when the electronic device fails to receive position information of the user's hand 1101 from the controller 1121, the electronic device may determine that an operational error has occurred in the tracking sensor included in the controller 1121.

In an embodiment, when the electronic device detects an operational error of the tracking sensor included in the controller 1121, the electronic device may set the user's hand 1101 manipulating the controller 1121 as a tracking target. The electronic device may capture, using a camera, the user's hand 1101 manipulating the controller 1121, and may mark, with a marker, a region 1130 corresponding to the user's hand 1101 in an image 1120 capturing the user's hand 1101. For example, the image 1120 of the user's hand 1101 may represent an image capturing the controllers 1121 and 1122 and the user's hands 1101 and 1102.

In an embodiment, since the controller 1121 fails to track the position of the user's hand 1101 manipulating the controller 1121, the electronic device may continuously track the user's hand 1101 by setting the user's hand 1101 as a tracking target based on image analysis of the image 1120. The electronic device may analyze a position and a shape of the user's hand 1101 based on the image 1120 captured by the camera. Since the electronic device fails to receive tracking information about the user's hand 1101 from the controller 1121, the electronic device may mark, with a marker, a region 1130 corresponding to the user's hand 1101 in the image 1120 and may display, on a display screen, the region 1130 marked with the marker. The electronic device may notify the user that the user's hand 1101 manipulating the controller 1121 is being tracked by the electronic device and that an operational error has occurred in the tracking sensor included in the controller 1121 by displaying, with a marker, the region 1130 corresponding to the user's hand 1101.

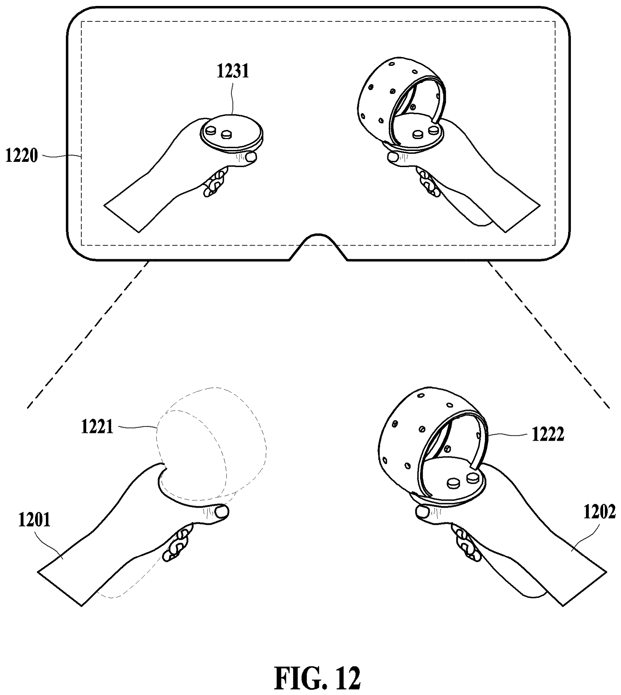

FIG. 12 is a diagram illustrating a process in which an electronic device displays a graphic affordance corresponding to a controller when a connection between the controller and the electronic device is terminated or when the controller is separated from a user's hand according to various embodiments.

In an embodiment, when detecting that a connection with a controller 1221 has been terminated or that the controller 1221 and a user's hand 1201 manipulating the controller 1221 are separated from each other, the electronic device may display a graphic affordance 1231 for generating an operation command for the controller 1221.

The connection between the electronic device and the controller 1221 may be terminated, for example, when a battery of the controller 1221 becomes discharged or when wireless communication between the controller 1221 and the electronic device is disconnected. In addition, the controller 1221 may detect contact with the user's hand 1201, and when no contact with the user's hand 1201 is detected for a predetermined period, the controller 1221 may determine that the user's hand 1201 has been separated from the controller 1221. The controller 1221 may transmit, to the electronic device, information indicating that the user's hand 1201 manipulating the controller 1221 has been separated from the controller 1221.

The shape of the graphic affordance 1231 for generating an operation command for the controller 1221 may be similar to, or may be different from, the shape of the controller 1221. The electronic device may display, on a screen, an image 1220 capturing the controllers 1221 and 1222 and the user's hands 1201 and 1202 manipulating the controllers 1221 and 1222. The electronic device may display the graphic affordance 1231 corresponding to the controller overlaid onto the image 1220.

When the electronic device detects that a connection with the controller 1221 has been terminated or that the controller 1221 and the user's hand 1201 manipulating the controller 1221 are separated from each other, the electronic device may turn on a camera to detect a user gesture with respect to the graphic affordance 1231. The electronic device may determine, through the graphic affordance 1231, whether a user gesture indicates an operation command for the controller 1221 and may perform an operation according to the determined operation command.

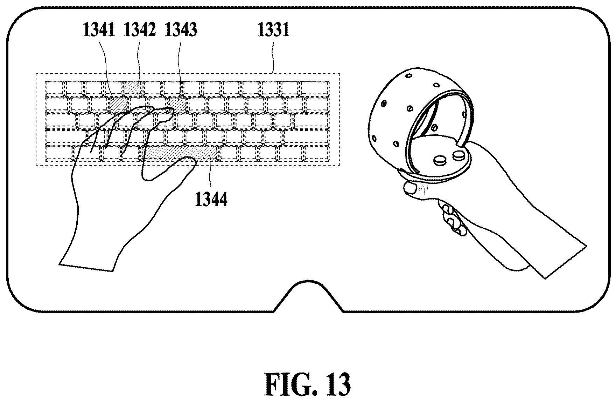

FIG. 13 is a diagram illustrating a process in which an electronic device changes an object type of a graphic affordance displayed corresponding to a controller according to various embodiments.

In an embodiment, the electronic device may determine an object type of a graphic affordance displayed corresponding to a controller. Object types that may be used as controllers may include, but are not limited to, joystick types, keyboard types, and instrument types.

In an embodiment, when a user gesture corresponding to one of a plurality of object types that may be used as controllers is recognized, the electronic device may determine an object type of a graphic affordance displayed corresponding to the controller in a virtual space 1200. For example, the electronic device may obtain an image of a user's hand through a camera and may detect a user gesture from the obtained image through image analysis. When the detected user gesture is a keyboard input gesture, the electronic device may determine an object type of a graphic affordance 1231 displayed corresponding to the controller to be a keyboard type.

In an embodiment, the electronic device may display, in a graphic affordance 1331 displayed corresponding to the controller, a region (e.g., a region 1341, 1342, 1343, or 1344) for generating an operation command for the controller such that the region is distinct from other regions. Referring to FIG. 13, the electronic device may display, in the graphic affordance 1331, a region for generating an operation command for the controller in a color that is distinct from other regions. For example, when the electronic device detects a user gesture (e.g., touching the region 1341) on the region 1341 of the graphic affordance 1331, the electronic device may generate an operation command for the controller corresponding to the region 1341.

Furthermore, the electronic device may determine an operation command for the controller indicated by the detected user gesture and output the determined operation command as voice or text. In an embodiment, the electronic device may output an operation command for the controller as voice or text before performing an operation corresponding to the operation command for the controller indicated by the user gesture. In other words, the electronic device may transmit, to the user, the operation command for the controller recognized by the electronic device before performing an operation corresponding to the operation command for the controller indicated by the user gesture. The user may cancel the operation command for the controller before the electronic device performs an operation corresponding to the operation command for the controller indicated by the user gesture. For example, the electronic device may determine an operation command for the controller indicated by the user gesture and display an interface object for canceling an operation corresponding to the determined operation command. The user may prevent the electronic device from performing an operation corresponding to the determined operation command by interacting with the interface object for canceling an operation.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment, the electronic device is not limited to those described above.

It should be understood that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question and may refer to components in other aspects (e.g., importance or order) is not limited. It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an ASIC.

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one among the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. For purpose of simplicity, the description of a processing unit is used as singular; however, one skilled in the art will appreciate that a processing unit may include a plurality of processing elements and a plurality of types of processing elements. For example, the processing unit may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs and/or digital versatile discs (DVDs); magneto-optical media such as optical discs; and hardware devices that are specially configured to store and perform program instructions, such as read-only memory (ROM), random-access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

## Claims

1. An electronic device (101; 201; 301; 401; 501) comprising:
a camera (265a; 265b; 415) capturing a user gesture;
memory (130) storing computer-executable instructions; and
a processor (120) accessing the memory (130) and executing the instructions,
wherein the instructions, when executed, cause the processor (120) to:
when determining that a target controller among a plurality of controllers (721; 722) registered with the electronic device (101; 201; 301; 401; 501) has an abnormality, display, based on an abnormal state of the target controller, a graphic affordance corresponding to the target controller, detect the user gesture with respect to the displayed graphic affordance using the camera (265a; 265b; 415), and determine an operation command for the target controller indicated by the detected user gesture.

2. The electronic device (101; 201; 301; 401; 501) of claim 1, wherein the instructions, when executed, cause the processor (120) to:
determine an abnormal state of the target controller based on a signal received from the target controller.

3. The electronic device (101; 201; 301; 401; 501) according to any one of claims 1 to 2, wherein the instructions, when executed, cause the processor (120) to:
when determining that the target controller has an abnormality, turn on the camera (265a; 265b; 415).

4. The electronic device (101; 201; 301; 401; 501) according to any one of claims 1 to 3, wherein the instructions, when executed, cause the processor (120) to:
when detecting an operational error of a button included in the target controller, display a graphic affordance having an increased size compared to at least one of a width and a height of the button in an image capturing the target controller.

5. The electronic device (101; 201; 301; 401; 501) according to any one of claims 1 to 4, wherein the instructions, when executed, cause the processor (120) to:
when detecting an operational error of a gyro sensor included in the target controller, display a graphic affordance having an increased size compared to a size of the target controller in an image capturing the target controller.

6. The electronic device (101; 201; 301; 401; 501) according to any one of claims 1 to 5, wherein the instructions, when executed, cause the processor (120) to:
when detecting an operational error of a tracking sensor included in the target controller, set a user's hand manipulating the target controller as a tracking target, and display, as a marker, a region corresponding to the user's hand in an image capturing the user's hand.

7. The electronic device (101; 201; 301; 401; 501) according to any one of claims 1 to 6, wherein the instructions, when executed, cause the processor (120) to:
display, on a display screen, a virtual reality (VR) image together with an augmented reality (AR) image including a graphic affordance corresponding to the target controller.

8. The electronic device (101; 201; 301; 401; 501) according to any one of claims 1 to 7, wherein the instructions, when executed, cause the processor (120) to:
determine an object type of a graphic affordance displayed in response to the target controller.

9. The electronic device (101; 201; 301; 401; 501) according to any one of claims 1 to 8, wherein the instructions, when executed, cause the processor (120) to:
when a user gesture corresponding to one object type among a plurality of object types available for use as a controller is recognized, determine an object type of a graphic affordance displayed in response to the target controller.

10. The electronic device (101; 201; 301; 401; 501) according to any one of claims 1 to 9, wherein the instructions, when executed, cause the processor (120) to:
output an operation command for the target controller indicated by the detected user gesture as voice or text.

11. A method performed by an electronic device (101; 201; 301; 401; 501), the method comprising:
when determining that a target controller among a plurality of controllers (721, 722) registered with the electronic device (101; 201; 301; 401; 501) has an abnormality, displaying, based on an abnormal state of the target controller, a graphic affordance corresponding to the target controller;
detecting the user gesture with respect to the displayed graphic affordance using a camera (265a; 265b; 415); and
determining an operation command for the target controller indicated by the detected user gesture.

12. The method of claim 11, wherein the displaying of the graphic affordance corresponding to the target controller comprises:
determining an abnormal state of the target controller based on a signal received from the target controller.

13. The method according to any one of claims 11 to 12, wherein the detecting of the user gesture comprises:
when determining that the target controller has an abnormality, turning on the camera (265a; 265b; 415).

14. The method according to any one of claims 11 to 13, wherein the displaying of the graphic affordance corresponding to the target controller comprises:
when detecting an operational error of a button included in the target controller, displaying a graphic affordance having an increased size compared to at least one of a width and a height of the button in an image capturing the target controller.

15. The method according to any one of claims 11 to 14, wherein the displaying of the graphic affordance corresponding to the target controller comprises:
when detecting an operational error of a gyro sensor included in the target controller, displaying a graphic affordance having an increased size compared to a size of the target controller in an image capturing the target controller.
